# EUROPEAN PATENT APPLICATION

(11) **EP 3 982 358 A2**
(43) Date of publication of application: **13.04.2022**
(21) Application number: 21193378.3
(22) Date of filing: 26.08.2021
(51) Int. Cl.: G10L 15/20, G06F 3/16, G10L 15/06

(54) **WHISPER CONVERSION FOR PRIVATE CONVERSATIONS**

(30) Priority: 09.10.2020 US 202017067320
(71) Applicant: Intel Corporation, Santa Clara, CA 95054 (US)
(72) Inventor: BHALLA, Himanshu, 562125 Bengaluru (IN); FLEMING, Kristoffer, Chandler, AZ, 85249 (US); NACHMAN, Lama, San Francisco, CA, 94107 (US); CORDOURIER MARURI, Hector Alfonso, 44580 Guadalajara (MX); CHELLADURAI, Paul Sathya, 560102 Bengaluru (IN); BODAS, Anand V., 56008 Bangalore (IN); DEL HOYO ONTIVEROS, Juan Antonio, 45654 Tlajomulco de Zúñiga (MX); HUANG, Jonathan J., Pleasanton, CA, 94588 (US)
(74) Representative: Rummler, Felix

(57) **Abstract**

In an embodiment, a system includes a wearable device having a sensor that detects whisper data from a user. The whisper data may include vibrational data, audio data, and/or biometric signals, and correspond to words whispered by the user at a first decibel level. The system also includes a processor communicatively coupled to the sensor that extracts features associated with the whisper data including frequencies and/or amplitudes associated with the whispered data, and generates speech data based on the whisper data and the features. The speech data corresponds to the words spoken at a second decibel level, where the second decibel level is greater than the first decibel level.

## Description

### BACKGROUND

The present disclosure relates generally to whisper recognition and, more particularly, transforming whispered speech data into "normal" or non-whispered speech data for participants in an electronic audio conversation.

This section is intended to introduce the reader to various aspects of art that may be related to various aspects of the present disclosure, which are described and/or claimed below. This discussion is believed to be helpful in providing the reader with background information to facilitate a better understanding of the various aspects of the present disclosure. Accordingly, it should be understood that these statements are to be read in this light, and not as admissions of prior art.

Conducting electronic audio conversations (e.g., teleconferences, telephone calls, and the like) in public places can expose private information (e.g., health information, financial information, personal information, business information, confidential information, and so forth) to one or more unintended parties. A participant in the electronic audio conversation may lower their voice to a whisper in order to reduce the likelihood sensitive information is disseminated to unintended parties. However, whispered audio may be more difficult to hear for other participants in the electronic audio conversation and may be difficult to understand. As a result, whispering may be inefficient for carrying out an electronic audio conversation in a public place.

### BRIEF DESCRIPTION OF THE DRAWINGS

Various aspects of this disclosure may be better understood upon reading the following detailed description and upon reference to the drawings in which:
FIG. 1 is a diagram of a device incorporating a whisper conversion system, in accordance with an embodiment of the present disclosure;
FIG. 2 is a diagram of example sensor locations on a user for a device incorporating a whisper conversion system, such as the device of FIG. 1, in accordance with an embodiment of the present disclosure;
FIG. 3 is a flow diagram of the whisper conversion system of FIG. 1 training a machine learning model, in accordance with an embodiment of the present disclosure;
FIG. 4 is a flow diagram of the whisper conversion system of FIG. 1 generating speech data utilizing the machine learning model of FIG. 2, in accordance with an embodiment of the present disclosure;
FIG. 5 is a block diagram of the whisper conversion system of FIG. 1, in accordance with an embodiment of the present disclosure; and
FIG. 6 is a flow diagram of a process for converting whisper data during a conversation, in accordance with an embodiment of the present disclosure.

### DETAILED DESCRIPTION OF SPECIFIC EMBODIMENTS

One or more specific embodiments of the present disclosure will be described below. In an effort to provide a concise description of these embodiments, not all features of an actual implementation are described in the specification. It should be appreciated that in the development of any such actual implementation, as in any engineering or design project, numerous implementation-specific decisions must be made to achieve the developers' specific goals, such as compliance with system-related and business-related constraints, which may vary from one implementation to another. Moreover, it should be appreciated that such a development effort might be complex and time consuming, but would nevertheless be a routine undertaking of design, fabrication, and manufacture for those of ordinary skill having the benefit of this disclosure.

Electronic audio conversations (e.g., teleconferences, telephone calls, virtual assistant communications, and the like) in public places may expose sensitive information (e.g., health information, financial information, business information, personal information, confidential information, and so forth) to unintended recipients (e.g., that may overhear the conversations) and may potentially result in financial losses, identity theft, and/or any other number of adverse issues. While users may whisper during conversations to reduce the likelihood of unintended recipients overhearing such sensitive information, whispered audio may be difficult to hear and/or understand, may sound unprofessional in a business setting, and may also be uncomfortable to listen to for users on a receiving end of the electronic audio (e.g., intended recipients). Additionally or alternatively, a participant in an electronic audio conversation may whisper so as not to disturb other people in a surrounding area, such as a home, office, or public place.

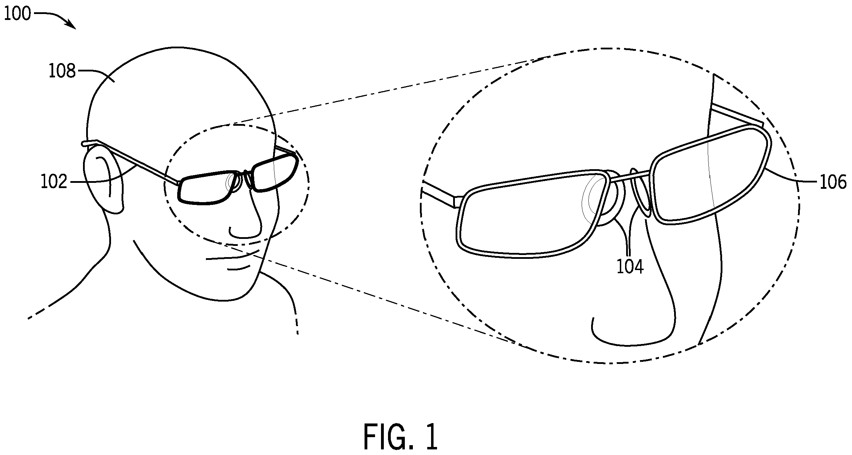

With the preceding in mind, FIG. 1 is a diagram of a device, such as eyeglasses 102, incorporating a sensor 104 of a whisper conversion system 100, in accordance with an embodiment of the present disclosure. In some embodiments, the device may be a wearable device and may include any number of sensors 104 and a frame 106. For example, the wearable device may be worn on a part of a user 108, such as on a head and/or a neck of the user 108. The sensor 104 may be a biometric sensor, vibration sensor, bone conduction sensor, accelerometer, and/or audio sensor (e.g., microphone) and the sensor 104 may sense a biometric signal (e.g., electromyography (EMG)), vibrations, and/or audio (e.g., whispers, spoken voice) from the user 108. In certain embodiments, the sensor 104 may contact the user 108 during a sensing period. For example, the sensor 104 may sense a vibration in a nasal bone of the user 108. More specifically, the sensor 104 may be an electrode that measures an electrical potential difference in the user 108 (e.g., at a body part of the user 108, such as a head and/or neck) and generates signal data for transmission to and processing by one or more components of the whisper conversion system 100. In some embodiments, the sensor 104 may include one or more vibration sensors without including a microphone, as the microphone may capture unwanted and/or ambient noise that may affect accuracy of the captured vibrations.

In some embodiments, the sensor 104 may be a piezoelectric sensor and may measure vibrations due to movement of a body part of the user 108 (e.g., head and/or neck) during contact with the user 108. Additionally or alternatively, the sensor 104 may include an optical device, such as a camera, a laser Doppler vibrometer, and/or a light detection and ranging (LIDAR) system, and may measure vibrations on a surface (e.g., a body part of the user 108) without contacting the surface. For example, the sensor 104 may emit light (e.g., a laser beam) towards a body part of the user 108 and may sense reflected light from the body part. As such, the sensor 104 may determine vibration amplitude and vibration frequency based on the Doppler shift between the emitted light and the reflected light. Additionally or alternatively, the sensor 104 may be an electromechanical system, such as a diaphragm microphone, and may include a component (e.g., diaphragm) that vibrates due to sound waves (e.g., whispers) from the user 108.

Data (e.g., vibration data, audio data) detected by the sensor 104 may include desired signal components, as well as noise (e.g., unwanted) components. Signal to noise ratio is a comparison between a level of the desired signal and a level of noise. Different locations on a user, such as user 108, may provide better measurements for certain types of sensors (e.g., vibration sensors, microphones,) over other types of sensors. For example, an audio sensor may provide a better signal to noise ratio (SNR) for audio data near a mouth than near an ear of the user 108, and a bone conduction sensor may provide a better SNR when placed near a nasal bone than near a cheek of the user 108. As such, one or more sensors may be selectively placed at different locations on the user 108 to ensure accuracy of the sensed vibrations and/or audio for increased SNR. In order to accommodate placing sensors at different locations on the user 108, the device may include a headset device, headphones, a headband, earphones, scarf, or any other suitable wearable device or combination of wearable devices.

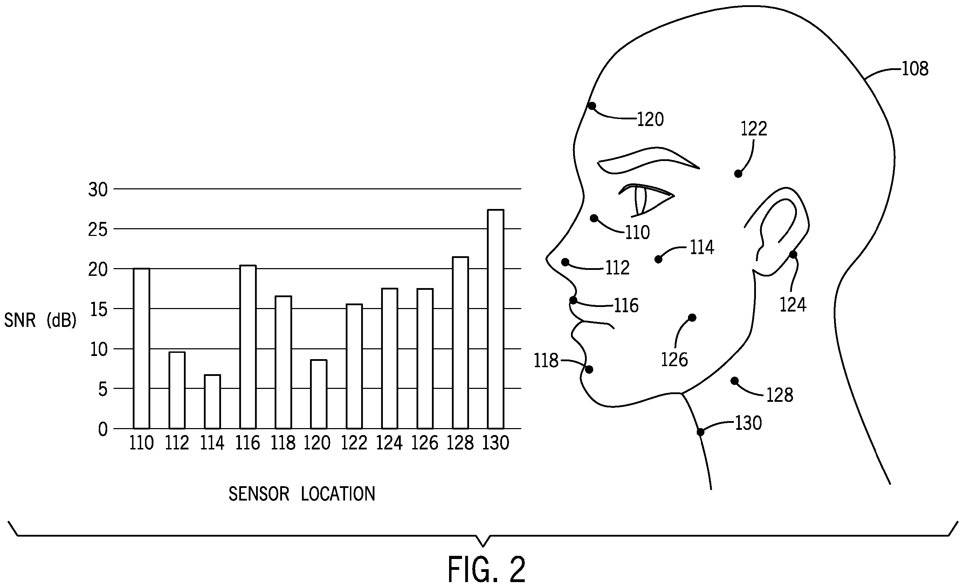

With the preceding in mind, FIG. 2 is a diagram of example sensor locations for one or more sensors 104 of the whisper conversion system 100, in accordance with an embodiment of the present disclosure. Example locations 110, 112, 114, 116, 118, 120, 122, 124, 126, 128, 130 may be located on a body part of the user 108, such as a portion of a head or neck. In certain embodiments, the example locations may be a target for the sensor 104, such as a target for a laser Doppler vibrometer and the sensor 104 may sense vibrations at the target. The graph illustrates average SNR of a vibration sensor at the example locations 110, 112, 114, 116, 118, 120, 122, 124, 126, 128 130. As seen in the graph, a vibration sensor placed at location 110 adjacent a nasal bone of the user 108 has a better SNR than a vibration sensor placed at location 114 adjacent a cheek of the user 108. As such, a device incorporating the whisper conversion system 100 may include a vibration sensor contacting the user 108 adjacent a nasal bone, such as on a nose pad of eyeglasses 102. Additionally or alternatively, the user 108 may not wear eyeglasses or may be uncomfortable wearing eyeglasses. As such, the device incorporating the whisper conversion system 100 may include a vibration sensor contacting the user 108 adjacent the ear, such as headphones, a headset device, a headband or earbuds, at location 124 that exhibits a similar SNR to the location 110. In certain embodiments, the device may include any number of vibration sensors at any number of example locations, such as a cap including sensors 104 at locations 120, 122, and 124, a chinstrap including sensors 104 at location 118 and/or 126, a scarf or neck covering including sensors 104 at locations 128, 130, and the like.

As used herein, "whispered speech" may include a speaker speaking softly using the speaker's breath but without the use of the speaker's vocal cords. "Normal speech" may include the use of a speaker's vocal cords and a speaker speaking at a conversational volume (e.g., between forty to seventy decibels). The whisper conversion system 100 may convert whispered speech into normal speech by extracting features of whispered speech recorded by a sensor and comparing extracted features to expected features identified using a machine learning model. Training data including whispered speech and normal speech may be used to train the machine learning model. For example, a user may read the same passage of text in a whispered voice and a normal voice, and the machine learning model may be trained based on recordings of the whispered voice and normal voice.

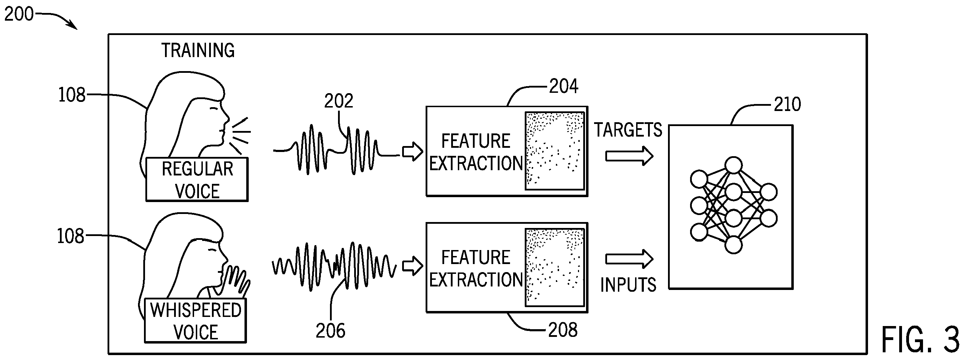

With the preceding in mind, FIG. 3 is a flow diagram 200 of the whisper conversion system 100 training a machine learning model 210, in accordance with an embodiment of the present disclosure. A sensor, such as the sensor 104 in FIG. 1, may generate and/or receive training voice data 202 and training whisper data 206 from a user 108. In certain embodiments, the sensor 104 may receive the training voice data 202 during a sensing period based on a threshold time duration (e.g., one minute, five minutes, ten minutes, and so forth). For example, the whisper conversion system 100 may transmit a control signal to the sensor 104 to begin and/or end the sensing period based on the threshold time duration.

Additionally or alternatively, the whisper conversion system 100 may include a user interface and may display an indication to the user 108 to begin and/or end speaking based on the threshold time duration. In some embodiments, the user interface may display a particular passage of text for the user 108 to read aloud during the sensing period. Alternatively, the user interface may indicate the user may speak freely (e.g., randomly) during the sensing period. In certain embodiments, a first sensing period corresponding to the training whisper data 206 may differ from a second sensing period corresponding to the training voice data 202. For example, the first sensing period may be longer or shorter than the second sensing period. Alternatively, the first sensing period and the second sensing period may be equal in time duration. In some embodiments, the user interface of the whisper conversion system may display a first passage of text during the first sensing period and a second passage of text during the second sensing period. Alternatively, the same passage of text may be displayed during the first sensing period and the second sensing period. In certain embodiments, the training voice data 202 and/or the training whisper data 206 may be stored in a memory of the whisper conversion system 100. Additionally or alternatively, the training voice data 202 and/or the training whisper data 206 may include any number of samples (e.g., audio samples, vibration samples) and the whisper conversion system 100 may train the machine learning model after a threshold amount of samples have been received and/or stored. For example, the threshold amount of samples may be a number of samples and/or a total time duration of samples associated with the training data.

The training whisper data 206 and training voice data 202 may include muscle movement and/or vibrations associated with a body part of the user 108. For example, the sensor 104 may capture muscle movement and/or vibrations as the user 108 speaks and/or whispers and may generate the training whisper data 206 and training voice data 202. In some embodiments, the training whisper data 206 and training voice data 202 may include audio data associated with words spoken by the user. For example, the training whisper data 206 may have a decibel level of forty decibels or less (e.g., thirty decibels or less, twenty decibels or less, and so forth) and the training voice data 202 may have a decibel level of forty-five to seventy decibels (e.g., fifty to sixty-five decibels, fifty-five to sixty decibels, and so forth). Additionally or alternatively, the training whisper data 206 may include muscle activity, biometric signals, and the like and may not include any corresponding audio data (e.g., zero decibels).

In certain embodiments, the training voice data 202 and the training whisper data 206 may include biometric signals, vibrations, and/or audio data from the user 108. The whisper conversion system 100 may perform feature extraction 204, 208 on the training voice data 202 and the training whisper data 206, respectively, and may extract features (e.g., frequency, amplitude, decibel level). The whisper conversion system 100 may also perform data processing steps (e.g., analog/digital conversion, Fourier Transform, separating the data into frames) on the training voice data 202, the training whisper data 206, and the extracted features, and may generate waveforms (e.g., vibration, waveforms, audio waveforms), spectrograms, and/or any other suitable signal format based on the training voice data 202 and the training whisper data 206. In certain embodiments, the extracted features may include voice characteristics corresponding to a normal spoken voice associated with the user, such as a threshold voice volume range (e.g., between forty-five to seventy decibels, fifty to sixty-five decibels, fifty-five to sixty decibels, and so forth), a tone of voice associated with the user, an accent associated with the user, and any other suitable voice characteristic. Additionally or alternatively, the extracted features may include whisper characteristics corresponding to a whispered voice associated with the user, such as a frequency of vibrations, an amplitude of vibrations, a change in vibration direction, a threshold whisper volume range, a tone of whisper associated with the user, and any other suitable whisper characteristic. In certain embodiments, the whisper conversion system 100 may generate whisper text data corresponding to the training whisper data 206 and speech text data corresponding to the training voice data 202. For example, the whisper text data may include any number of text strings, words, and/or phrases whispered by the user 108 during the sensing period corresponding to the training whisper data 206.

The whisper conversion system 100 may train the machine learning model 210 with the extracted features, the training voice data 202, and the training whisper data 206. Additionally, the whisper conversion system 100 may generate a profile associated with the user 108 after training the machine learning model 210. The user profile may include the voice characteristics corresponding to a normal spoken voice associated with the user and may include the whisper characteristics corresponding to a whispered voice associated with the user. Additionally or alternatively, the user profile may include the training voice data 202, the training whisper data 206, and extracted features associated with one of the training voice data 202 or the training whisper data 206. In certain embodiments, the whisper conversion system 100 may store the user profile, the training voice data 202, and the training whisper data 206 in a storage device associated with the whisper conversion system 100. Additionally or alternatively, the whisper conversion system 100 may transmit the user profile, the training voice data 202, and/or the training whisper data 206 to a remote storage device.

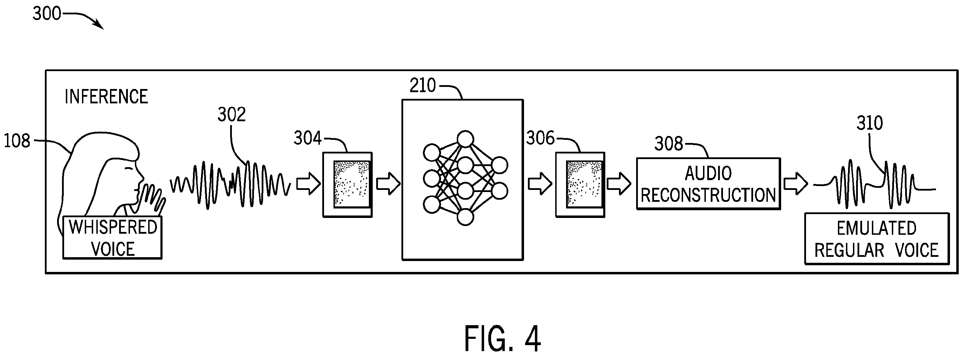

After training the machine learning model 210, the whisper conversion system 100 may receive whispered speech data and may use the machine learning model to generate normal speech from the whispered speech data (e.g., after the machine learning model 210 has completed training and been implemented as part of the whisper conversion system 100). With the preceding in mind, FIG. 4 illustrates a flow diagram 300 of the whisper conversion system 100 of FIG. 1 generating speech data 310 utilizing the machine learning model 210 of FIG. 2, in accordance with an embodiment of the present disclosure. A sensor, such as sensor 104 in FIG. 1, may receive whispered speech data 302 from a user 108 and the whisper conversion system 100 may perform feature extraction 304 and extract features 306 (e.g., frequency, amplitude), may perform data processing steps (e.g., analog/digital conversion, Fourier transform, separating the whispered speech data 302 into any number of frames), and may generate waveforms (e.g., vibration waveforms, audio waveforms), spectrograms, and/or any other suitable signal format based on the whispered speech data 302. For example, a camera may generate signal data associated with neck and/or facial muscle movements of a user 108 and a biometric sensor may generate signal data associated with electrical activity in neck and/or facial muscles of the user 108. The sensors may transmit respective signal data to a processor and the processor may combine the signal data into the whispered speech data 302.

In certain embodiments, the whispered speech data 302 may include vibration data and/or muscle activity data, such as vibrational amplitudes, vibrational frequencies, changes in vibrational direction (e.g., rotational direction, angular direction), and the like. Additionally or alternatively, the whispered speech data 302 may include some whispered speech that does not need to be converted and transformed into normal speech. For example, the user 108 may increase their voice above a threshold decibel level (e.g., forty decibels or more) for the whispered speech and/or the user 108 may make filler sounds or words (i.e., sounds or words spoken during a conversation that signal the user 108 is pausing to think, such as "hmm" or "umm") during an electronic audio conversation. In some embodiments, this "filler" whispered speech 302 may be included in the generated speech data 310 without conversion and/or transformation by the machine learning model 210.

The whisper conversion system 100 may utilize the machine learning model 210 and may input the whispered speech data 302 and extracted features 306 into the machine learning model 210. For example, the machine learning model 210 may compare the whispered speech data 302 and associated extracted features 306 with extracted features from the training voice data and the training whisper data associated with the user 108. Additionally or alternatively, the machine learning model 210 may compare the whispered speech data 302 and associated extracted features with expected features and/or generic training data (e.g., training data provided by another speaker, which may be pre-equipped with the whisper conversion system 100 and used until the machine learning model 210 becomes fully trained using the user's voice). In certain embodiments, the machine learning model 210 may compare whisper characteristics with the whispered speech data 302.

The machine learning model 210 may output extracted features 306 and the whisper conversion system 100 may perform an audio reconstruction step 308 on the extracted features 306 to generate the speech data 310. In certain embodiments, the whisper conversion system 100 may generate the speech data 310 based on the voice characteristics associated with the user profile of the user 108. For example, the whisper conversion system 100 may generate the speech data 310 to be within a threshold voice volume range of a volume range provided by the user profile. The whisper conversion system 100 may generate the speech data 310 in the form of normal speech, and may transmit the speech data 310 to another user device (e.g., an electronic device having an audio output device, such as a computing device, a laptop, a tablet, a smartphone, a headset) as part of an electronic audio conversation.

In certain embodiments, the speech data 310 may have any number of voice characteristics associated with the user 108 and may be in the form of the user's voice. For example, the voice characteristics may include a speech rate and/or a speech cadence of the user 108 and the whisper conversion system 100 may generate the speech data 310 according to the speech rate and/or speech cadence. Additionally or alternatively, the speech data 310 may have any number of voice characteristics associated with a synthetic voice and/or the user may select a synthetic voice from any number of synthetic voices for generation of the speech data 310. In certain embodiments, the whisper conversion system 100 may select a synthetic voice for generation of the speech data 310 based on a comparison between the user's voice and any number of synthetic voices. Such synthetic voices may come pre-equipped with the whisper conversion system 100 (e.g., until the machine learning model 210 becomes fully trained using the user's voice). For example, the whisper conversion system 100 may compare a pitch, an accent, a tone, an inflection, a dynamic volume, or any other suitable voice characteristic between the user's voice and any number of synthetic voices. Additionally or alternatively, the user 108 may input and/or may select any number of voice characteristics, such as an emotion, a tone, a pitch, an accent, a speech rate, or any other suitable voice characteristic, and the whisper conversion system 100 may generate the speech data 310 according to the user input and/or selection. As such, the speech data 310 may be in the form of the selected synthetic voice and the participants in the electronic audio conversion may hear the speech data 310 in the form of the synthetic voice.

Additionally or alternatively, the whisper conversion system 100 may convert the extracted features 306 to text data corresponding to the whispered words spoken by the user 108. The text data may include associated metadata corresponding to the voice characteristics associated with the user profile of the user 108 and the text data may be smaller in size than audio data corresponding to the extracted features 306. For example, the user 108 may select a format for the output of the whisper conversion system 100, such as speech data 310 and/or text data. In certain embodiments, the whisper conversion system 100 may transmit the text data and the associated metadata to additional processing circuitry for generation of speech data 310 based on the voice characteristics of a user profile for the user 108. For example, the whisper conversion system 100 may transmit the text data and metadata to the other user device participating in an electronic audio conversation. The other user device may generate the speech data 310 based on the text data and the metadata such that another user using the user device may hear the user 108 speaking in a normal voice. As such, the whisper conversion system 100 may reduce network congestion by transferring the text data instead of audio data (e.g., the generated speech data 310) to another user device participating in an electronic audio conversation with the user 108.

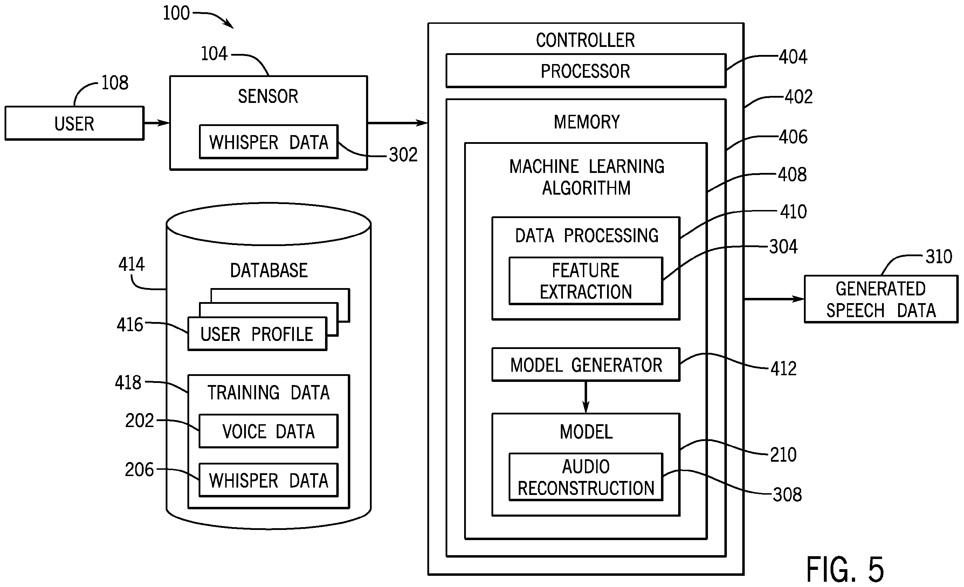

With the preceding in mind, FIG. 5 is a block diagram of the whisper conversion system 100, in accordance with an embodiment of the present disclosure. The whisper conversion system 100 may receive input whisper data 302, convert the whisper data 302, and generate speech data 310 based on the whisper data 302. In some embodiments, the whisper conversion system 100 may include a database 414 that may store a set of training data 418 including training voice data 202 and training whisper data 206. In certain embodiments, the training voice data 202 may include a recording of speech associated with a user, such as user 108, and the training whisper data 206 may include a recording of whispers associated with the user. For example, a sensor, such as sensor 104, may record audio, vibrations, muscle activity, and/or biometric signals associated with the user. Additionally, the database 414 may store a set of user profiles, such as user profile 416 associated with the user 108, and the user profile 416 may be associated with a subset of the set of training data 418. As such, the database 414 may include any number of user profiles for use with the whisper conversion system 100 and the whisper conversion system 100 may utilize the user profiles in generating speech data in a user's normal voice and/or text data associated based on a corresponding user profile.

In certain embodiments, the whisper conversion system 100 may include a controller 402, which may be provided in as part of a computing device, such as a personal computer, a laptop, a tablet, a mobile device, a server, or any other suitable computing device. As such, the controller 402 may include one or more processors 404 (collectively referred to herein as "a processor 404"), which may be provided in the form of one or more general purpose microprocessors, one or more application specific integrated circuits (ASICs), one or more field programmable logic arrays (FPGAs), and the like. The processor 404 may be communicatively coupled to the database 414 and one or more sensors, such as sensor 104. The controller 402 may be coupled to the sensor 104 and the database 414 by any suitable techniques for communicating signal data and control signals between the controller 402, the database 414, and the sensor 104, such as a wireless, optical, coaxial, wired, or other suitable connection. In some embodiments, the controller 402 may include receiving and conversion circuitry for receiving training data for training a machine learning model, and for receiving and converting whisper data to generate speech data.

In certain embodiments, the processor 404 may perform a training algorithm, such as a machine learning algorithm 408, which may include instructions that transform whisper data and generate speech data, as previously discussed. For example, the machine learning algorithm 408 may be implemented as software stored in a memory 406 and/or any number of storage devices of the whisper conversion system 100. In some embodiments, the memory 406 may include one or more tangible, non-transitory computer-readable media that store instructions executable by the processor 404 and/or data to be processed by the processor 404. For example, the memory 406 may include random access memory (RAM), read only memory (ROM), rewritable non-volatile memory, such as flash memory, hard drives, optical discs, and/or the like.

In certain embodiments, the processor 404 may generate or train a machine learning model 210 using the training data 418. The machine learning algorithm 408 and/or the machine learning model 210 may include an audio reconstruction component 308. In certain embodiments, the audio reconstruction component 308 may receive and may process the whisper data 302 to generate speech data 310 in the form of normal speech according to the user's voice.

The processor 404 may perform data processing steps on the training data 418 to train the machine learning model 210. In certain embodiments, the processor 404 may perform feature extraction, perform data cleanup, associate and/or combine input data sets, and/or normalize data to provide a dataset for training the machine learning model 210. The data processing component 410 may receive the training data 418, including the training voice data 202 and the training whisper data 206. In some embodiments, the data processing component 410 may perform a data cleanup process to resolve data inconsistencies, remove noisy data points, and/or remove outlier data points in the training data 418. For example, the data processing component 410 may remove data points from the training data 418 that fall outside a specified or threshold range, such as one standard deviation, two standard deviations, or more, from an average data point.

In certain embodiments, the data processing component 410 may perform a data separation process to separate the training data 418 into any number of frames and may perform an analog/digital conversion process to convert the recorded audio into a digital signal. Additionally or alternatively, the data processing component 410 may perform a Fourier transform on the training data 418 to generate a first set of frequencies associated with the training voice data 202 and a second set of frequencies associated with the training whisper data 206.

In certain embodiments, the data processing component 410 may include a feature extraction component 304, which may extract a first set of features (e.g., frequencies, amplitudes, and so forth) associated with the training voice data 202 and the training whisper data 206. The machine learning algorithm 408 may input the training voice data 202, the training whisper data 206, and the extracted features into a model generator component 412 and the processor 404 may train and generate the machine learning model 210. In certain embodiments, the machine learning model 210 may generate the user profile 416 based on the training data 418. For example, the machine learning model 210 may identify voice characteristics associated with the user 108 based on the training data 418 and a comparison between the training voice data 202 and the training whisper data 206. In certain embodiments, the machine learning model 210 may access expected waveforms corresponding to a whispered voice of the user 108. The machine learning model 210 may identify and extract features from whisper data 302, such as amplitude of vibrations, frequency of vibrations, changes in vibration direction (e.g., angular direction, rotational direction), and the like. Additionally, the machine learning model 210 may generate waveforms based on extracted features from the whisper data 302 and may compare the generated waveforms to expected waveforms associated with training data 418. As such, the machine learning model 210 may compare received whisper data to the expected waveforms and may determine whispered words spoken by the user 108.

In certain embodiments, the processor 404 may generate the speech data 310 utilizing the machine learning model 210 and input whisper data 302 from the sensor 104. For example, the sensor 104 may sense the whisper data 302 (e.g., vibrations, muscle activity, audio, biometric signals) and may transmit the whisper data 302 to the controller 402. The whisper data 302 may include vibration data and/or muscle activity data, such as vibrational amplitudes, vibrational frequencies, changes in vibration and/or movement direction (e.g., angular direction, rotational direction), and the like. Additionally or alternatively, the whisper data 302 may correspond to any number of words whispered by the user 108, and may have a decibel level of forty decibels or less (e.g., thirty decibels or less, twenty decibels or less, and so forth).

In certain embodiments, the whisper conversion system 100 may include any number of sensors (e.g., camera, biometric sensor, audio sensor, accelerometer, and so forth) and each sensor may transmit whisper data to the processor 404. For example, a camera may generate signal data associated with neck and/or facial muscle movements of a user 108 and a biometric sensor may generate signal data associated with electrical activity in neck and/or facial muscles of the user 108. The sensors may transmit respective signal data to the processor 404 and the processor 404 may combine the signal data into the whisper data 302. In certain embodiments, the processor 404 may combine and/or may average the first set of signal data and the second set of signal data to generate the whisper data 302. For example, the processor 404 may compare a first set of signal data associated with a first sensor to a second set of signal data associated with a second sensor. As such, the processor 404 may perform a data processing step to ensure better accuracy of the whisper data 302.

The processor 404 may input the whisper data 302 into the machine learning model 210 and the audio reconstruction component 308 may receive the whisper data 302 and may generate speech data 310 based on the whisper data 302. For example, the audio reconstruction component 308 may extract features of the whisper data 302 and may compare the extracted features to expected features associated with generic training data and/or extracted features associated with training data based on a user's voice... using the machine learning model 210, such as in the form of a binary classifier tree. The binary classifier tree may include any number of nodes and the machine learning model 210 may compare extracted features and/or waveforms at each node of the binary classifier tree to expected features and/or waveforms. As such, the machine learning model 210 may compare waveforms associated with the whisper data 302 with expected waveforms and may determine a set of words and/or sounds associated with the whisper data 302. In certain embodiments, the generated speech data 310 may correspond to the same words spoken by the user 108 in the whisper data 302 and may be indicative of a normal, spoken voice of the user 108. For example, the generated speech data 310 may have a decibel level of forty-five to seventy decibels (e.g., fifty to sixty-five decibels, fifty-five to sixty decibels, and so forth). In certain embodiments, the whisper conversion system 100 may transmit the generated speech data to any number of computing devices participating in an electronic audio conversation.

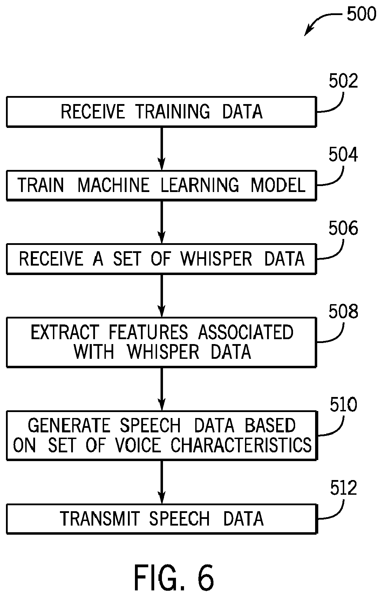

With the preceding in mind, FIG. 6 is a flow diagram of a process 500 for generating speech data based on whispered data utilizing the whisper conversion system 100, in accordance with an embodiment of the present disclosure. While the process 500 is described as being performed by the processor 404, it should be understood that the process 500 may be performed by any suitable device that may control and/or communicate with components of the whisper conversion system 100. Furthermore, while the process 500 is described using steps in a specific sequence, it should be understood that the present disclosure contemplates that the described steps may be performed in different sequences than the sequence illustrated, and certain described steps may be skipped or not performed altogether. In some embodiments, the process 500 may be implemented by executing instructions stored in a tangible, non-transitory, computer-readable medium, such as the memory 406, using any suitable processing circuitry, such as the processor 404.

In this process 500, the processor 404 receives (block 502) training data as sensed and transmitted by, for example, the sensor 104 of FIG. 1. In some embodiments, the training data may be vibration data, a biometric signal, audio data, or any combination thereof and may include whispered words and normal spoken words. For example, the sensor 104 may be disposed on a user, such as user 108, and may detect vibrations in a nasal bone of the user. The processor 404 trains (block 504) a machine learning model using the training data. For example, the processor 404 performs data processing steps, such as extracting features from the training data, and generates waveforms (e.g., vibration waveforms, audio waveforms) based on the extracted features.

The processor 404 receives (block 506) whisper data as sensed and transmitted by, for example, the sensor 104 of FIG. 1. In some embodiments, the whisper data may be vibration data, a biometric signal, audio data, or any combination thereof and may include words whispered by the user 108. The processor 404 extracts (block 508) features from the whisper data, such as vibration amplitudes, vibration frequencies, change in vibration direction, and/or decibel levels associated with the frequencies, and the like. The processor 404 utilizes the extracted features to generate waveforms (e.g., vibration waveforms, audio waveforms) associated with the whisper data.

The processor 404 inputs the whisper data 302 and the extracted features to the machine learning model 210 to generate speech data (block 510). For example, the machine learning model 210 may compare the extracted features with expected features and/or extracted features associated with training data and may match the extracted features associated with the whisper data 302 to expected features and/or extracted features associated with training data based on the comparison. In certain embodiments, the generated speech data may correspond to the same set of words spoken in the whisper data, and may also correspond to a normal, spoken voice of the user. Additionally or alternatively, the generated speech data may be in a text format. The processor 404 may transmit (block 512) the speech data to any number of computing devices during an electronic audio conversation. As such, each computing device may generate audio and/or text based on the speech data and may playback the generated speech data and/or display the text associated with the speech data.

The techniques presented and claimed herein are referenced and applied to material objects and concrete examples of a practical nature that demonstrably improve the present technical field and, as such, are not abstract, intangible or purely theoretical. Further, if any claims appended to the end of this specification contain one or more elements designated as "means for [perform]ing [a function]..." or "step for [perform]ing [a function]...", it is intended that such elements are to be interpreted under 35 U.S.C. 112(f). However, for any claims containing elements designated in any other manner, it is intended that such elements are not to be interpreted under 35 U.S.C. 112(f).

### EXAMPLE EMBODIMENTS OF THE DISCLOSURE

The following numbered clauses define certain example embodiments of the present disclosure.
CLAUSE 1.
   A system, comprising:
   a wearable device, comprising;
   a sensor configured to sense whisper data from a user, the whisper data comprising a set of vibrational data, wherein the whisper data corresponds to a set of words whispered by the user at a first decibel level; and
   one or more processors communicatively coupled to the sensor and configured to:
      extract a set of features associated with the whisper data, wherein the set of features include a set of frequencies associated with the vibrational data, a set of amplitudes associated with the vibrational data, or a combination thereof; and
      generate a set of speech data based on the whisper data and the set of features, wherein the set of speech data corresponds to the set of words at a second decibel level, wherein the second decibel level is greater than the first decibel level.
CLAUSE 2.
   The system of clause 1, wherein the sensor comprises an accelerometer, a bone conduction sensor, an optical device, or any combination thereof.
CLAUSE 3.
   The system of clause 1, wherein the one or more processors are configured to transmit the set of speech data to a computing device during an electronic audio conversation..
CLAUSE 4.
   The system of clause 1, wherein the set of vibrational data comprises an electrical potential difference.
CLAUSE 5.
   The system of clause 1, wherein the wearable device comprises a frame and wherein the sensor is disposed on the frame and configured to contact the user during a sensing period.
CLAUSE 6.
   The system of clause 1, wherein the first decibel level is less than forty decibels.
CLAUSE 7.
   The system of clause 6, wherein the second decibel level is between fifty and seventy decibels.
CLAUSE 8.
   The system of clause 1, wherein the sensor is configured to sense training data from the user, the training data comprising a set of training whisper data and a set of training voice data.
CLAUSE 9.
   The system of clause 8, wherein the one or more processors are configured to:
   train a machine learning model based on the training data; and
   generate a user profile associated with the user based on the machine learning model, wherein the user profile comprises a set of voice characteristics and a set of whisper characteristics.
CLAUSE 10.
   A method, comprising:
   receiving whisper data using a sensor disposed on a wearable device, the whisper data corresponding to a set of words, and the whisper data comprising a biometric signal, audio data, a vibration signal, or any combination thereof;
   receiving a set of voice characteristics associated with a user, wherein the set of voice characteristics correspond to a spoken voice of the user;
   transforming the whisper data based on the set of voice characteristics to text data, wherein the text data corresponds to the set of words; and
   transmitting the text data to a plurality of computing devices, wherein each of the plurality of computing devices is configured to generate speech data based on the text data and the set of voice characteristics.
CLAUSE 11.
   The method of clause 10, comprising generating speech data based on the text data and the set of voice characteristics.
CLAUSE 12.
   The method of clause 11, comprising transmitting the generated speech data to the plurality of computing devices.
CLAUSE 13.
   The method of clause 10, comprising:
   receiving training data using the sensor, wherein the training data comprises training whisper data corresponding to a second set of words and training voice data corresponding to the second set of words; and
   generating a user profile based on the training data, wherein the user profile comprises the set of voice characteristics.
CLAUSE 14.
   The method of clause 10, wherein the sensor is configured to sense vibrations in a nasal bone.
CLAUSE 15.
   The method of clause 10, wherein the set of voice characteristics comprises a threshold voice volume range, a tone associated with the user, an accent associated with the user, or any combination thereof.
CLAUSE 16.
   The method of clause 10, comprising:
   receiving a set of training data, the set of training data comprising a set of training voice data and a set of training whisper data;
   training a machine learning model based on the set of training data; and
   generating the set of voice characteristics using the machine learning model.
CLAUSE 17.
   A device, comprising:
   a sensor configured to contact a user and sense vibrational data from the user during a sensing period, the vibrational data corresponding to a set of words; and
   one or more processors communicatively coupled to the sensor and configured to:
      receive the vibrational data;
      extract a set of features from the vibrational data, wherein the set of features include a set of frequencies of the vibrational data, a set of amplitudes of the vibrational data, or a combination thereof; and
      generate speech data based on the set of features, wherein the speech data corresponds to the set of words.
CLAUSE 18.
   The device of clause 17, comprising a frame having a nose pad, wherein the sensor is disposed in the nose pad.
CLAUSE 19.
   The device of clause 17, comprising headphones configured to be worn on a head of the user, wherein the sensor is disposed on the headphones.
CLAUSE 20.
   The device of clause 17, comprising a scarf configured to be worn on a neck of the user, wherein the sensor is disposed on the scarf.

## Claims

1. A wearable device, comprising;
a sensor configured to sense whisper data from a user, the whisper data comprising a set of vibrational data, wherein the whisper data corresponds to a set of words whispered by the user at a first decibel level; and
one or more processors communicatively coupled to the sensor and configured to:
extract a set of features associated with the whisper data, wherein the set of features include a set of frequencies associated with the vibrational data, a set of amplitudes associated with the vibrational data, or a combination thereof; and
generate a set of speech data based on the whisper data and the set of features, wherein the set of speech data corresponds to the set of words at a second decibel level, wherein the second decibel level is greater than the first decibel level.

2. The wearable device of claim 1, wherein the sensor comprises an accelerometer, a bone conduction sensor, an optical device, or any combination thereof.

3. The wearable device of claim 1 or 2, wherein the one or more processors are configured to transmit the set of speech data to a computing device during an electronic audio conversation.

4. The wearable device of claim 1 or 2, wherein the set of vibrational data comprises an electrical potential difference.

5. The wearable device of claim 1 or 2, comprising a frame and wherein the sensor is disposed on the frame and configured to contact the user during a sensing period.

6. The wearable device of claim 1, wherein the first decibel level is less than forty decibels.

7. The wearable device of claim 6, wherein the second decibel level is between fifty and seventy decibels.

8. The wearable device of claim 1, wherein the sensor is configured to sense training data from the user, the training data comprising a set of training whisper data and a set of training voice data.

9. The wearable device of claim 8, wherein the one or more processors are configured to:
train a machine learning model based on the training data; and
generate a user profile associated with the user based on the machine learning model, wherein the user profile comprises a set of voice characteristics and a set of whisper characteristics.

10. A method, comprising:
receiving whisper data using a sensor disposed on a wearable device, the whisper data corresponding to a set of words, and the whisper data comprising a biometric signal, audio data, a vibration signal, or any combination thereof;
receiving a set of voice characteristics associated with a user, wherein the set of voice characteristics correspond to a spoken voice of the user;
transforming the whisper data based on the set of voice characteristics to text data, wherein the text data corresponds to the set of words; and
transmitting the text data to a plurality of computing devices, wherein each of the plurality of computing devices is configured to generate speech data based on the text data and the set of voice characteristics.

11. The method of claim 10, comprising generating speech data based on the text data and the set of voice characteristics.

12. The method of claim 11, comprising transmitting the generated speech data to the plurality of computing devices.

13. The method of any of claims 10-12, comprising:
receiving training data using the sensor, wherein the training data comprises training whisper data corresponding to a second set of words and training voice data corresponding to the second set of words; and
generating a user profile based on the training data, wherein the user profile comprises the set of voice characteristics.

14. The method of any of claims 10-12, wherein the sensor is configured to sense vibrations in a nasal bone.

15. The method of any of claims 10-12, wherein the set of voice characteristics comprises a threshold voice volume range, a tone associated with the user, an accent associated with the user, or any combination thereof.
